Europäisches Patentamt

European Patent Office

Office européen des brevets

(19)

(11) **EP 0 817 166 B1**

(12) ## EUROPEAN PATENT SPECIFICATION

(45) Date of publication and mention
of the grant of the patent:
**23.08.2000   Bulletin 2000/34**

(51) Int Cl.$^7$: **G10K 11/178**, F01N 1/00

(21) Application number: **97115497.6**

(22) Date of filing: **30.04.1993**

(54) **Noise control device**

Lärmkontrollegerät

Dispositif antibruit

(84) Designated Contracting States:
**DE FR GB**

(30) Priority: **01.05.1992  JP  11278892**
**18.05.1992  JP  12497492**
**19.05.1992  JP  12629492**

(43) Date of publication of application:
**07.01.1998   Bulletin 1998/02**

(62) Document number(s) of the earlier application(s) in
accordance with Art. 76 EPC:
**93911968.1 / 0 592 693**

(73) Proprietor: **FUJITSU TEN LIMITED**
**Kobe-shi, Hyogo 652-8510 (JP)**

(72) Inventors:
• **Sakiyama, Kazuhiro**
**Akashi-shi, Hyogo 674 (JP)**

• **Nagami, Masaaki**
**Hyogo 674 (JP)**
• **Sako, Kazuya**
**Kakogawa-shi, Hyogo 675 (JP)**
• **Babasaki, Masahiro**
**Takatsuki-shi, Osaka 569 (JP)**

(74) Representative: **Skone James, Robert Edmund**
**GILL JENNINGS & EVERY**
**Broadgate House**
**7 Eldon Street**
**London EC2M 7LH (GB)**

(56) References cited:
**EP-A- 0 479 367            WO-A-89/07701**
**WO-A-91/13243            WO-A-91/15666**

EP 0 817 166 B1

**Description**

BACKGROUND OF THE INVENTION

1. Field of the Invention

The present invention relates to a noise control device which silences noise by outputting from speakers the signals having a phase opposite to and a sound pressure equal to those of noise emitted from the muffler to an automobile, and more particularly to a device for decreasing space occupied by an actuator thereof, for increasing frequency band of the actuator, and for preventing the noise-decreasing effect from changing in space.

2. Description of the Related Art

Passive silencing devices such as mufflers or the like have heretofore been used for reducing noise produced by internal combustion engines accompanying, however, improvements from the standpoint of sizes, silencing performance, etc. There has, on the other hand, been proposed an active noise control device which cancels noise by outputting from speakers a compensation sound having a phase opposite to and a sound pressure equal to those of noise generated from the source of noise. However, putting the active noise control device into practical use has been belated due to its frequency characteristics or insufficient stability. In recent years, however, signal processing technology using digital circuits has been developed making it possible to treat frequencies over extended ranges. Therefore, many practicable noise control devices have now been proposed (for example, see Japanese Unexamined Patent Publication (Kokai) No. 63-311396).

The above publication discloses an active noise control device of the so-called two-microphone one-speaker type made up of a combination of a feedforward system and a feedback system in which noise is detected by a microphone for noise source that is installed on the upstream side of the duct, a signal having a phase opposite to and a sound pressure equal to those of the noise is formed by a signal processing circuit and is output from a speaker installed on the downstream side of the duct, and the silenced result is detected by a microphone at the silencing point and is fed back.

Next, described below is an actuator constituted by the speakers and the like.

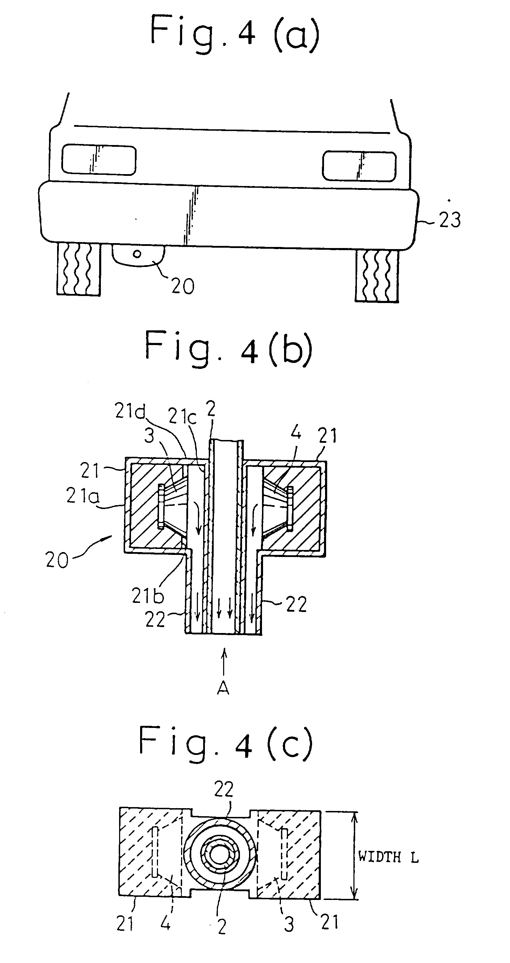

Fig. 4 is a sectional view illustrating the constitution of an actuator 20 in a conventional noise control device. As shown in the diagram (a), a rear portion of an automobile is provided with an actuator 20 of the noise control device near a tail pipe or a terminal pipe through a muffler. The actuator 20 shown in the diagram (b) viewed from the upper direction to the ground comprises two speakers 3 and 4 symmetrically arranged with respect to a tail pipe 2 which emits noise at the terminal pipe of a muffler that silences exhaust noise of an automobile, an enclosure 21 that closes the rear portions of the speakers 3 and 4, and a silencing sound guide portion 22 that guides silencing sound from the front surfaces of the speakers 3 and 4 to the outlet of the tail pipe 2 along therewith. Space formed by the enclosure 21 at the rear portions of the speakers 3 and 4 is depicted by hatched lines. The enclosure 21 comprises a plate 21a surrounding the rear portions of the speakers 3 and 4, a front plate 21b for mounting the opening portions of the speakers 3 and 4, a plate 21c opposed to the front surfaces of the speakers 3 and 4 in order to guide the silencing sound from the front surfaces of the speakers 3 and 4 to the silencing sound guide portion 22, and a side plate 21d. The diagram (c) is a front view of when the opening of the tail pipe 2 is viewed from the direction of arrow A in the diagram (b). As shown in the diagram (c), the enclosure 21 has an oblong shape as viewed from the direction of arrow A. The front surfaces of the speakers 3 and 4 are arranged vertically in relation to the ground.

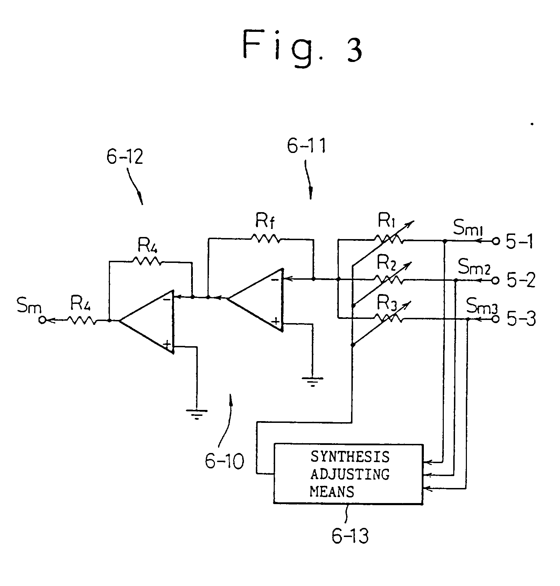

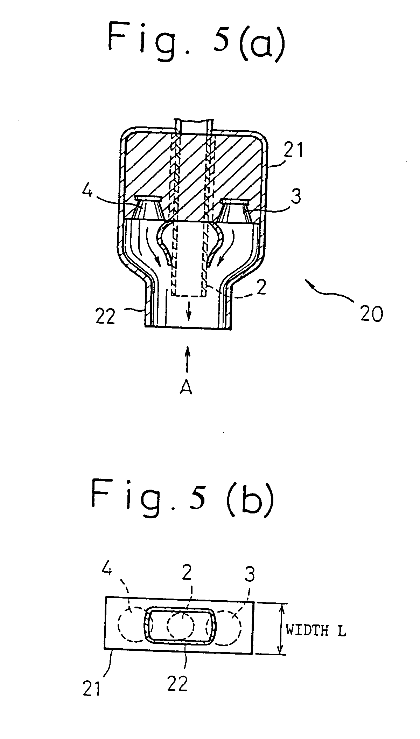

Fig. 5 is a view illustrating the constitution of an actuator 20 in another conventional noise control device. What is different in the diagrams (a), (b) from Fig. 3 is that the front surfaces of the speakers 3 and 4 do not face each other but are directed backward toward the rear of the automobile, that is, in the same direction as the front surface of the tail pipe. What is common in Fig. 4 with Fig. 3 is that the front surfaces of the speakers 3 and 4 are arranged vertically in relation to the ground.

In the actuator 20 for the conventional noise control device, the diameter of the speakers 3 and 4 must be increased and the volume of space defined by the enclosure 21 must be increased in order to decrease noise of low frequencies (50 Hz to 300 Hz). That is, as shown in Fig. 3 or Fig. 4, in order to hold speakers 3 and 4 for producing bass sound, the enclosure 21 must have a width which is at least as wide as the diameter of the openings of the speakers 3 and 4. In practice, however, the actuator 20 must be installed near the outlet of the tail pipe 2 where space is narrow. If the enclosure 21 is too great in width, a fist problem arises in that the enclosure 21 is possibly in contact with the ground due to vibration when the automobile is moving.

In view of the above-mentioned problem, therefore an object of the present invention is to provide an actuator of a noise control device in which the width L of the enclosure 21 can be reduced.

Next, since the enclosure 21 does not have a great volume, a second problem arises in that the control of noise cannot be improved due to the large amount of bass vibration of the speakers, so that frequency band of the speakers becomes narrow.

WO 89/07701 describes an active sound attenuation system for combustion engine exhaust systems. The system uses counter noise acoustic wave generators that are protected from the environment of a medium propagating undesirable noise by an acoustically tuned anti-noise chamber. To provide for noise cancellation at the outlet end of an exhaust pipe the anti-noise chamber has an annular opening disposed substantially in the plane of the exhaust pipe outlet thereby giving an effective common point source for the propagated undesirable noise and the counter-noise acoustic wave.

In view of the above-mentioned problems, therefore another object of the present invention is to provide an actuator of a noise control device which can substantially make the volume thereof great.

Further, the silenced result as described above is detected by a microphone (sensor) to be used for feedback. In this case, the microphone should be positioned near the speaker to obtain a good effect, but since this silenced result is distributed in space, a third problem arises in that positioning a microphone only near the speaker is not sufficient to avoid disparity of the cancelled effect in space.

In view of the above-mentioned problems, therefore another object of the present invention is to provide an actuating means of a noise control device which can avoid disparity of the cancelled effect in space.

According to the present invention, we provide a noise control device for silencing noise emitted from a tail pipe of an automobile, the noise control device being disposed at the outlet of the tail pipe of a muffler and being configured so as to emit noise that silences exhaust noise of the automobile, the noise control device comprising a plurality of microphones to measure noise at various positions of the automobile, a first microphone positioned to measure noise at the outlet of the tail pipe, and a plurality of speakers to output from their front side silencing sound having a phase opposite to and a sound pressure equal to noise sound emitted from the tail pipe, characterised by a second microphone positioned at some distance from the speakers, a third microphone positioned so as to pick up noise from the back side of the speakers and a mixing circuit for mixing outputs of the microphones, the mixing circuit adjusting the outputs of each microphone depending on the degree of contribution of that microphone to the silencing noise generation.

According to the noise control device of the present invention, residual sound is measured at each of the portions of the automobile by the plurality of the microphones that are installed at a position close to the actuator, at a position separated away by a predetermined distance from the actuator and at a position on the back side of the actuator where there exists leakage noise. The outputs based on the silencing contribution degrees of the plurality of the microphones are synthesized by the synthesizing circuit, and an adaptive filter forms a compensation signal based on the thus synthesized signal. That is, the sensor inputs at many silencing points are synthesized and averaged in order to obtain silencing effect not only at a place close to the tail pipe but also at places remote therefrom. Thus, deviation in the silencing effect is prevented in the automobile as a whole, and a uniform silencing effect is obtained.

BRIEF DESCRIPTION OF THE DRAWINGS

Fig. 1 is a diagram illustrating the constitution of a noise control device which is a prerequisite of an embodiment of the present invention;
Fig. 2 is a diagram illustrating an embodiment of the present invention in which a plurality of sensors are arranged at the rear parts of an automobile;
Fig. 3 is a diagram illustrating the signal process of a plurality of sensors of Fig. 2;
Fig. 4 is a diagram illustrating the constitution of an actuator 20 in a conventional noise control device;
Fig. 5 is a diagram illustrating the constitution of another actuator 20 in a conventional noise control device.

DETAILED DESCRIPTION OF THE PREFERRED EMBODIMENTS

An embodiment of the present invention will now be described with reference to the drawings.

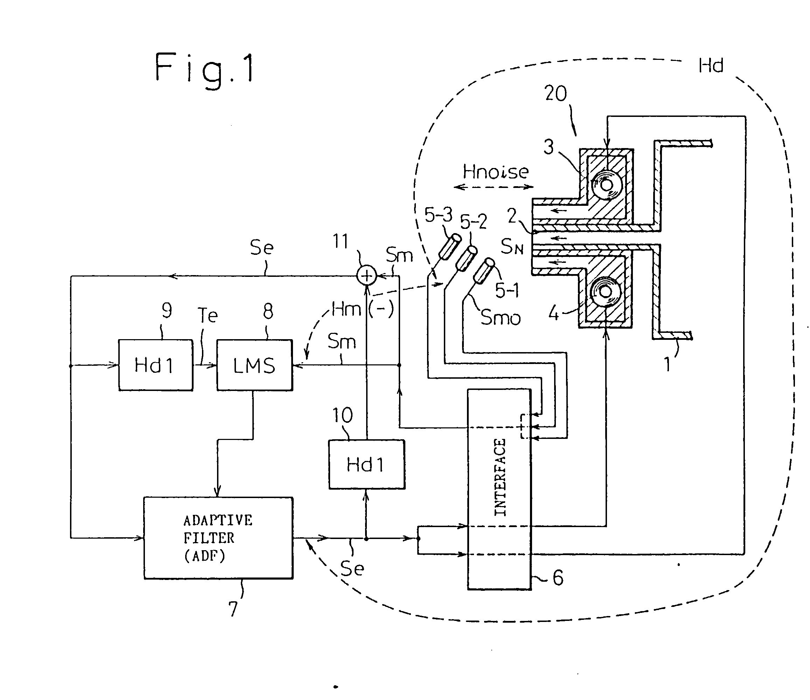

Fig. 1 is a diagram illustrating the constitution of a noise control device which is a prerequisite of an embodiment of the present invention. The noise control device diagramed here is constituted by two speakers 3 and 4 for silencing noise emitted from a tail pipe 2 that is the terminal pipe of a muffler 1 that silences exhaust noise of an automobile, three microphones 5-1, 5-2 and 5-3 which are arranged as will be described later to trap, as an error signal, residual noise consisting of noise from the tail pipe 2 and silencing sound which is emitted from the speakers 3 and 4 and has a phase opposite to and a sound pressure equal to those of the noise, an interface 6 which converts a signal to the speakers 3 and 4 into an analog signal from the digital form and amplifies it, converts analog signals of the microphones 5-1, 5-2 and 5-3 into digital signals and amplifies them, and adaptive filter 7 of FIR (finite impulse response) which inputs a reproduced noise signal that will be described later as to-be-controlled signal and forms a compensation sound that silences noise via the interface 6, a coefficient updating means 8 which inputs a synthesized signal of error signals from the microphones 5-1, 5-2 and 5-3 and updates the filter coefficient of FIR of the adaptive filter 7, a first transfer characteristics simulating means 9 which inputs said reproduced noise signal and simulates transfer characteristics of from the output of the adaptive filter 7 through the interface 6, speakers 3 and 4, microphones 5-1, 5-2 and 5-3 up to the coefficient updating means 8 in order to provide the filter coefficient of the coefficient updating means 8, a second transfer characteristics simulation means 10 which inputs a compensation signal from the adaptive filter 7 and has the same transfer characteristics as the above first transfer characteristics simulation means 9, and a differential signal calculation means 11 which calculates a differential signal between an output signal of the second transfer characteristics simulation means 10 and a synthesized signal of output signals of the microphones 5-1, 5-2 and 5-3, and sends the differential signal as a reproduced noise signal to the adaptive filter 7 and to the first transfer characteristics simulation means 9. Here, the adaptive filter 7, coefficient updating means 8, first transfer characteristics simulation means 9, second transfer characteristics simulation means 10 and differential signal calculation means 11 are constituted by digital signal processing units (DSP).

Described below is a series of operations of the noise control device. Here, transfer characteristics of from the output of the adaptive filter 7 to the microphone 5-1, 5-2, 5-3 are denoted by Hd, average transfer characteristics of from the microphones 5 to the filter coefficient updating means 8 are denoted by Hm, and average transfer characteristics of from the tail pipe 2 which is the source of noise to the microphones 5 are denoted by Hnoise. Moreover, a noise signal from the tail pipe 2 is denoted by Sn, an output signal from the microphones 5 is denoted by SmO, a compensation signal from the adaptive filter 7 is denoted by Sc, an input signal to the coefficient updating means 8 is denoted by Sm and a differential signal from an output signal of the differential signal calculation means 11 is denoted by Se. The differential signal will be used later as a reproduced noise signal to be input into the adaptive filter.

Then, the transfer characteristics Tdl simulated by the first transfer characteristics simulation means 9 and the second transfer characteristics simulation means 10 are given as,

$$Hdl = Hd \cdot Hm \qquad (1)$$

and a signal Sm0 detected by the microphone 5 becomes as follows:

$$Sm0 = Sn \cdot Hnoise + Sc \cdot Hd \qquad (2)$$

From the above-mentioned constitution and the above formulas (1) and (2), the differential signal Se which is a reproduced noise signal input to the adaptive filter 7 and is calculated by the differential signal calculation means 11, is obtained as follows:

$$Se = Sm0 \cdot Hm - Sc \cdot Hdl$$

$$= (Sn \cdot Hnoise + Sc \cdot Hd) \cdot Hm - Sc \cdot Hd \cdot Hm$$

$$= (Sn \cdot Hnoise + Sc \cdot Hd - Sc \cdot Hd) \cdot Hm$$

$$= Sn \cdot Hnoise \cdot Hm \qquad (3)$$

The input signal Sm to the coefficient updating means 8 is given as,

$$Sm = Sm0 \cdot Hm \qquad (4)$$

The other input signal Te is obtained by the first transfer characteristics simulation means 9 considering the transfer characteristics Tdl in relation to the reproduced noise signal Se. In the adaptive filter 7, the filter coefficient is changed by the coefficient updating means 8, so that the input signal Sm becomes zero. Therefore, under the condition where Sm = 0, i.e., Sm0 = 0, the compensation signal Sc output from the adaptive filter 7 is given from the above equation (2) as follows:

$$Sc \fallingdotseq -Sn \cdot Hnoise/Hd \qquad (5)$$

The coefficient updating means 8 finds a filter coefficient (Ck(n);K: number of stages) of FIR of the adaptive filter 7 by the method of least squares in compliance with the following equation,

$$Ck(n) = Ck(n - 1) + (Sm(n) \cdot \alpha/q(n + k - 1) \qquad (6)$$

where $\alpha$ is a coefficient of convergence, Sm(n) is a synthesized signal of the microphones 5-1, 5-2 and 5-3, q (n + k - 1) is a normalizing signal from the first transfer characteristics simulation means 9, and n is an ordinal number of a digital signal.

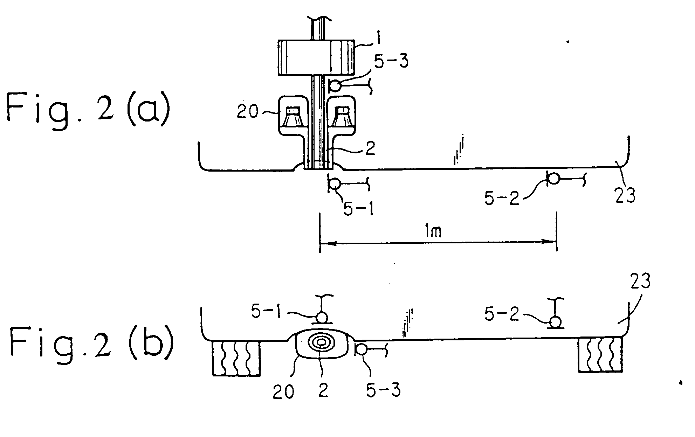

Fig. 2 is a diagram illustrating an embodiment of the present invention in which a plurality of sensors are arranged. In the diagrams (a) and (b) illustrating the rear portion of an automobile as viewed from the upper direction and the front, the first microphone 5-1 is installed at the outlet of the tail pipe 2 in a customary manner. The second microphone 5-2 is installed at a position remote from the first microphone 5-1 in the side direction by about 1 meter. The third microphone 5-3 is installed between the actuator 20 and the muffler 1 to pick up noise that leaks through space between the tail pipe 2 and the silencing sound guide portion 22. Mentioned above is an arrangement of the microphones 5-1, 5-2 and 5-3 which may be installed at various other places, as a matter of course. In this example, if the microphones are provided at portions apart from the neighborhood of the outlet of the tail pipe 2 and at the backside of the actuator 20, the provision is convenient because it becomes possible to detect noise at each position.

Fig. 3 is a diagram illustrating the signal process of a plurality of sensors of Fig. 2. The synthesizing circuit 6-10 shown here includes an adder circuit 6-11 that adds up signals from the microphones 5-1, 5-2 and 5-3, an invertor circuit 6-12 that inverts the output of the adder circuit 6-11, and a synthesis adjusting means 6-13 which changes the rate of synthesis of outputs of the microphones 5-1, 5-2 and 5-3 by adjusting resistors R1, R2 and R3 of the adder circuit 6-11. The synthesis adjusting means 6-13 is adjusted at an initial stage to change resistances of the resistors R1, R2 and R3 of the adder circuit depending upon the contribution degrees for silencing noise of the microphones 5-1, 5-2 and 5-3, for example, to increase the outputs of the microphones arranged closer to the speakers 3 and 4 when synthesizing. The signals Sm1, Sm2 and Sm3 from the microphones 5-1, 5-2 and 5-3 are synthesized so as to be output as Sm.

As explained above, according to the present invention, the disparity of the silenced effect in space can be avoided and thereby a homogeneous silenced effect can be obtained.

[Industrial Applicability]

The speakers of the noise control device according to the present invention can be used for controlling noise discharged with the exhaust gas of various automobiles and are suitable to reduce the volume of a speaker, to make the frequency band thereof broad and prevent the noise-decreasing effect from changing in space.

## Claims

1. A noise control device for silencing noise emitted from a tail pipe (2) of an automobile, the noise control device being disposed at the outlet of the tail pipe (2) of a muffler (1) and being configured so as to emit noise that silences exhaust noise of the automobile, the noise control device comprising a plurality of microphones (5-1,5-2,5-3) to measure noise at various positions of the automobile, a first microphone (5-1) positioned to measure noise at the outlet of the tail pipe, and a plurality of speakers (3,4) to output from their front side silencing sound having a phase opposite to and a sound pressure equal to noise sound emitted from the tail pipe (2), characterised by a second microphone (5-2) positioned at some distance from the speakers, a third microphone (5-3) positioned so as to pick up noise from the back side of the speakers and a mixing circuit (6-10) for mixing outputs of the microphones (5-1,5-2,5-3), the mixing circuit adjusting the outputs of each microphone depending on the degree of contribution of that microphone to the silencing noise generation.

2. The noise control device of claim 1, characterized by positioning said microphone (5-1) near the outlet of the tail pipe (2), positioning said microphone (5-2) apart by a constant distance from the tail pipe (2), and positioning said microphone (5-3) at the backside of the speaker (3,4).

## Patentansprüche

1. Geräuschkontrollvorrichtung zum Dämpfen von Geräuschen, die von einem Auspuffrohr (2) eines Automobils erzeugt werden, wobei die Geräuschkontrollvorrichtung an der Auslaßöffnung des Auspuffrohrs (2) eines Schalldämpfers (1) angeordnet und so konfiguriert ist, daß sie Geräusche aussendet, welche die Abgasgeräusche des Automobils dämpfen, wobei die Geräuschkontrollvorrichtung eine Vielzahl an Mikrophonen (5-1, 5-2, 5-3) umfaßt, um die Geräusche an verschiedenen Positionen des Automobils zu messen, wobei ein erstes Mikrophon (5-1) angeordnet ist, um das Geräusch an der Auslaßöffnung des Auspuffrohrs zu messen, und eine Vielzahl an Lautsprechern (3, 4), um von deren Frontseite ein Dämpfungsgeräusch auszusenden, dessen Phase der Phase des Geräusches, das vom Auspuffrohr (2) verursacht wird, entgegengesetzt ist, und dessen Schalldruck dem Schalldruck des Geräusches vom Auspuffrohr entspricht, dadurch gekennzeichnet, daß ein zweites Mikrophon (5-2) in einem gewissen Abstand von den Lautsprechern angeordnet ist, ein drittes Mikrophon (5-3) so angeordnet ist, daß es Geräusche von der Rückseite der Lautsprecher aufnimmt, und einen Mischkreis zum Mischen der Ausgangssignale der Mikrophone (5-1, 5-2, 5-3), wobei der Mischkreis die Ausgangssignale der einzelnen Mikrophone abhängig vom Grad des Beitrags jenes Mikrophons zur Dämpfungsgeräuscherzeugung einstellt.

2. Geräuschkontrollvorrichtung nach Anspruch 1, dadurch gekennzeichnet, daß das Mikrophon (5-1) in der Nähe der Auslaßöffnung des Auspuffrohrs (2) angeordnet ist, das Mikrophon (5-2) um einen bestimmten Abstand vom Auspuffrohr (2) entfernt angeordnet ist, und das Mikrophon (5-3) an der Rückseite der Lautsprecher (3, 4) angeordnet ist.

## Revendications

1. Dispositif de protection anti-bruit servant à amortir le bruit émis par une conduite arrière d'échappement (2) d'une automobile, le dispositif de protection anti-bruit étant disposé au niveau de la sortie de la conduite arrière d'échappement (2) d'un pot d'échappement (1) et étant configuré de façon à émettre un bruit qui amortit le bruit d'échappement de l'automobile, le dispositif de protection anti-bruit comprenant une pluralité de microphones (5-1, 5-2, 5-3) destinés à mesurer le bruit en différents endroits de l'automobile, un premier microphone (5-1) étant placé de façon à mesurer le bruit au niveau de la sortie de la conduite arrière d'échappement, et une pluralité de haut-parleurs (3, 4) destinés à émettre, à l'avant, un son d'amortissement ayant une phase opposée et une pression acoustique égale à celles du bruit émis par la conduite arrière d'échappement (2), caractérisé par un deuxième microphone (5-2) placé à une certaine distance des haut-parleurs, un troisième microphone (5-3) placé de façon à capter le bruit provenant de l'arrière des haut-parleurs, et un circuit mélangeur (6-10) servant à mélanger les sorties des microphones (5-1, 5-2, 5-3), le circuit mélangeur régulant la sortie de chaque microphone en fonction du degré de contribution de ce microphone à la production du bruit d'amortissement.

2.  Dispositif de protection anti-bruit selon la revendication 1, caractérisé en ce que ledit microphone (5-1) est placé à proximité de l'orifice de sortie de la conduite arrière d'échappement (2), ledit microphone (5-2) est placé en une position éloignée, à une distance constante de la conduite arrière d'échappement (2), et. ledit microphone (5-3) est placé à l'arrière des haut-parleurs (3, 4).

Fig.1

EP 0 817 166 B1

Fig. 2 (a)

Fig.2 (b)

# Fig. 3

# Fig. 4 (a)

23

20

# Fig. 4 (b)

21d  21c  2

3

21

21a

20

21b

22  22

4  21

A

# Fig. 4 (c)

22

WIDTH L

21  4  2  3  21

# Fig. 5(a)

# Fig. 5 (b)

WIDTH L